# EUROPÄISCHE PATENTSCHRIFT

(11) **EP 1 222 766 B1**
(45) Veröffentlichungstag und Bekanntmachung des Hinweises auf die Patenterteilung: **13.04.2011**
(21) Anmeldenummer: 00981134.0
(22) Anmeldetag: 28.09.2000
(51) Int. Cl.: H04L 1/00, H04L 25/03

(54) **DATENÜBERTRAGUNGSVERFAHREN MITTELS UND OHNE REFERENZSIGNALÜBERTRAGUNG**
DATA TRANSMISSION METHOD
PROCEDE DE TRANSMISSION DE DONNEES

(30) Priorität: 30.09.1999 DE 19946866
(43) Veröffentlichungstag der Anmeldung: 17.07.2002
(73) Patentinhaber: IPCom GmbH & Co. KG, 82049 Pullach (DE)
(72) Erfinder: KOWALEWSKI, Frank, D-38228 Salzgitter (DE)
(74) Vertreter: Gigerich, Jan
(86) Internationale Anmeldenummer: PCT/DE2000/003416
(87) Internationale Veröffentlichungsnummer: WO 2001/026261

(56) Entgegenhaltungen:
- EP-A- 0 615 352
- DE-A- 19 807 931
- GB-A- 2 329 796
- US-A- 4 995 057

## Beschreibung

### Stand der Technik

Die vorliegende Erfindung betrifft ein Datenübertragungsverfahren, bei dem ein Datensignal in Form eines Datenstroms von Datenbursts mit mindestens zwei Übertragungsmodi zwischen einem Sender und einem Empfänger übertragen werden, wobei in dem ersten Modus in dem jeweiligen Datenburst ein Referenzsignal vom Sender übertragen und im Empfänger ausgewertet wird und in dem zweiten Modus in dem jeweiligen Datenburst kein Referenzsignal vom Sender übertragen wird.

Aus der GB 2329796 A ist ein solches Datenübertragungsverfahren bekannt. Dort wird in einem ersten Übertragungsmode innerhalb eines Datenbursts eine Trainingssequenz zwecks Kanalschätzung übertragen. Zur Steigerung der Übertragungskapazität werden in einem zweiten Modus anstatt der Trainingssequenz zusätzliche Nutzdaten übertragen.

Obwohl prinzipiell auf beliebige Datenübertragungen anwendbar, werden die vorliegende Erfindung sowie die ihr zu Grunde liegende Problematik in Bezug auf ein zellulares CDMA-Datenübertragungssystem (CDMA = Code Division Multiple Access) erläutert, die sowohl einen Übertragungsmodus verwenden, der die Übertragung eines Referenzsignals erfordert als auch einen, der kein Referenzsignal erfordert. Der Hintergrund für die Notwendigkeit zweier Modi ist z.B. folgender: Bei der Übertragung von Daten über Mehrwegkanäle interferieren die übertragenen Datensymbole am Empfänger i.a.. Die Interferenzen lassen sich im Empfänger eliminieren, wenn dort die Impulsantwort des Kanals bekannt ist, wie aus K. D. Kammeyer: "Nachrichtenübertragung", 2. Aufl., Reihe Informationstechnik, Teubner, Stuttgart, 1996 und aus A. Klein, G.K. Kaleh und P.W. Baier: "Zero Forcing and Minimum Mean-Square-Error Equalization for Multiuser Detection in Code Division Multiple Access Channels", IEEE Trans. Vehic. Tech., Bd. 45 (1996), 276-287 entnehmbar. Die Kanalimpulsantwort kann z.B. im Empfänger aus einem empfangenen Referenzsignal geschätzt werden.

Interferenzen lassen sich aber auch im Sender eliminieren, wenn dort die Kanalimpulsantworten bekannt sind. Dann muß die Kanalimpulsantwort im Empfänger nicht mehr geschätzt werden. Mit anderen Worten ist dann keine Übertragung eines Referenzsignals notwendig.

Übertragungssysteme mit Interferenzeliminierung im Empfänger und Systeme mit Eliminierung im Sender können auch miteinander kombiniert werden, wie aus Bosch: "Mixed Use of Joint Predistortion and Joint Detection in the UTRA TDD Mode", ETSI Tdoc SMG2 UMTS-L1 205/98 bekannt.

Da in Datenübertragungssystemen, die Interferenzeliminierung sowohl im Empfänger als auch im Sender unterstützen, das übertragene Referenzsignal bei Eliminierung durch den Sender überflüssig ist, belegt das übertragene Referenzsignal dann unnötig Übertragungskapazität. Verwendet man bei Eliminierung durch den Sender ein eigenes Übertragungsformat, so werden die entsprechenden Übertragungsvorrichtungen komplexer (z.B. durch zusätzlich nötig werdende Kanalkodierungsschemata) und/oder die Datendienste der beiden Ubertragungsmodi verschieden.

### VORTEILE DER ERFINDUNG

Die der vorliegenden Erfindung zu Grunde liegende Idee besteht darin, daß das Datenformat für die zu übertragenden Daten in beiden Übertragungsmodi zweckmäßigerweise identisch gewählt wird und in dem Modus, der kein Referenzsignal erfordert, anstatt dieses Signals zusätzliche Redundanz der Daten übertragen wird.

Das erfindungsgemäße Verfahren mit den Merkmalen des Anspruches 1 weist den besonderen Vorteil auf, daß eine Verbesserung der Funkverbindung in dem Modus erreichbar ist, in dem kein Referenzsignal benötigt wird, und zwar unter sehr geringem Zusatzaufwand.

In den Unteransprüchen finden sich vorteilhafte Weiterbildungen und Verbesserungen des in Patentanspruch 1 angegebenen erfindungsgemäßen Verfahrens.

Gemäß einer bevorzugten Weiterbildung sind die anstatt des Referenzsignals übertragenen Redundanzdaten durch wiederholt übertragene Daten des Datensignals gegeben.

Gemäß einer weiteren bevorzugten Weiterbildung werden die wiederholt übertragenen Daten durch den Empfänger wiederholt empfangen und im Empfänger getrennt ausgewertet.

Gemäß einer weiteren bevorzugten Weiterbildung wird die Datenversion der wiederholt übertragenen Daten mit größerem Empfangssignal für die weitere Verarbeitung und/oder Übergabe an den Benutzer ausgewählt.

Gemäß einer weiteren bevorzugten Weiterbildung werden in dem zweiten Modus Interferenzen im Sender eliminiert.

Gemäß einer weiteren bevorzugten Weiterbildung werden mehrere Datenströme entsprechend dem CDMA-Verfahren gleichzeitig übertragen.

Gemäß einer weiteren bevorzugten Weiterbildung weisen die Datenbursts mindestens zwei Datenblöcke auf, zwischen denen ein Block angeordnet ist, der für das Referenzsignal im ersten Modus und für die Redundanzdaten im zweiten Modus verwendet wird.

Gemäß einer weiteren bevorzugten Weiterbildung wird das Datenformat für die zu übertragenden Datensignale in beiden Übertragungsmodi identisch gewählt.

### ZEICHNUNGEN

Ein Ausführungsbeispiel der Erfindung ist in der Zeichnung dargestellt und wird in der folgenden Beschreibung näher erläutert.

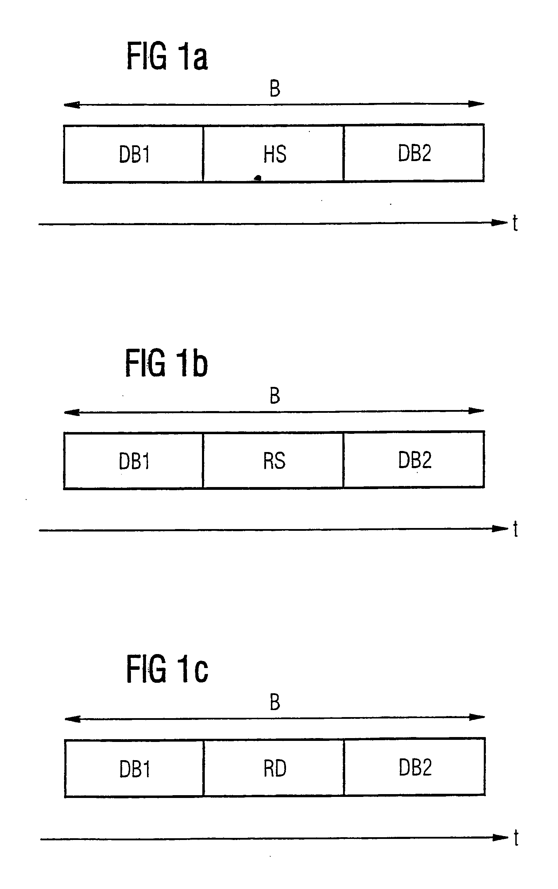

- Figur 1a-c: zeigt ein Blockdiagramm einer Burststruktur zur Erläuterung einer Ausführungsform der Erfindung.

### BESCHREIBUNG DER AUSFÜHRUNGSBEISPIELE

In Fig. 1a-c bezeichnen B einen Datenburst, t die Zeit, DB1 einen ersten Datenblock, DB2 einen zweiten Datenblock, HS einen Zwischenblock für ein Hilfssignal, RS einen Referenzsignaldatenblock und RD einen Redundanzsignaldatenblock.

Die Burststruktur nach Fig. 1a-c dient für ein zellulares CDMA-Datenübertragungssytem, das im Zeitduplex (TDD) arbeitet.

Dieses System weist zwei Übertragungsmodi auf:
- einen Modus A mit Eliminierung von Interferenzen im Empfänger durch gemeinsame Detektion (Joint Detection) entsprechend der Lehre von A. Klein, G.K. Kaleh und P.W. Baier: "Zero Forcing and Minimum Mean-Square-Error Equalization for Multiuser Detection in Code Division Multiple Access Channels", IEEE Trans. Vehic. Tech., Bd. 45 (1996), 276-287; und
- einen Modus B mit Eliminierung von Interferenzen im Sender durch gemeinsame Vorentzerrung.

Die Daten werden zwischen Sender und Empfänger in den Bursts B übertragen, welche jeweils die zwei Datenblöcke DB1 und DB2 und den dazwischen liegenden Hilfssignaldatenblock HS umfassen, wie in Fig. 1a illustriert.

Das Datenformat für die zu übertragenden Datensignale wird in beiden Übertragungsmodi identisch gewählt.

Im Modus A wird im Hilfssignaldatenblock HS ein Referenzsignaldatenblock RS übertragen, der zur Schätzung der Kanalimpulsantwort im Empfänger verwendet wird, wie in Fig. lb illustriert.

Im Modus B wird im Hilfssignaldatenblock HS ein Referenzsignaldatenblock RD übertragen, also zusätzliche Datenredundanz in Form von wiederholten Datensymbolen, wie in Fig. lc illustriert.

Unter den mehrfach übertragenen Datensymbolen werden im Empfänger die Versionen mit stärkerem Empfangssignal ausgewählt und weiterverarbeitet (z.B. durch eine Kanaldekodierung) oder an den Nutzer weitergegeben.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere kann das erfindungsgemäße Verfahren in allen Datenübertragungssystemen angewendet werden, die sowohl einen Übertragungsmodus verwenden, der die Übertragung eines Referenzsignals erfordert als auch einen, der kein Referenzsignal erfordert, und ist nicht auf CDMA-Datenübertragungssysteme beschränkt.

Auch kann ein beliebiges Kriterium zur selektiven Weiterverarbeitung bzw. Weiterleitung der Redundanzdaten angewendet werden.

## Patentansprüche

1. Datenübertragungsverfahren, bei dem ein Datensignal in Form eines Datenstroms von Datenbursts (B) mit mindestens zwei Übertragungsmodi zwischen einem Sender und einem Empfänger übertragen werden, wobei in dem ersten Modus in dem jeweiligen Datenburst (B) ein Referenzsignal (RS) vom Sender übertragen und im Empfänger ausgewertet wird und in dem zweiten Modus in dem jeweiligen Datenburst (B) kein Refernzsignal (RS) vom Sender übertragen wird,
**dadurch gekennzeichnet, dass**
in dem zweiten Modus anstatt des Referenzsignals (RS) zusätzliche Redundanzdaten (RD) des Datensignals, in dem jeweiligen Datenburst (B) übertragen werden, und
die anstatt des Referenzsignals (RS) übertragenen Redundanzdaten (RD) durch wiederholt übertragene Daten des Datensignals gegeben sind.

2. Verfahren nach Anspruch 1, **dadurch gekennzeichnet, dass** die wiederholt übertragenen Daten durch den Empfänger wiederholt empfangen werden und im Empfänger getrennt ausgewertet werden.

3. Verfahren nach Anspruch 2, **dadurch gekennzeichnet, dass** die Datenversion der wiederholt übertragenen Daten mit größerem Empfangssignal für die weitere Verarbeitung und/oder Übergabe an den Benutzer ausgewählt wird.

4. Verfahren nach einem der Ansprüche 1 bis 3, **dadurch gekennzeichnet, dass** in dem zweiten Modus Interferenzen im Sender eliminiert werden.

5. Verfahren nach einem der Ansprüche 1 bis 4, **dadurch gekennzeichnet, dass** mehrere Datenströme entsprechend dem CDMA-Verfahren gleichzeitig übertragen werden.

6. Verfahren nach einem der vorhergehenden Ansprüche, **dadurch gekennzeichnet, dass** die Datenbursts (B) mindestens zwei Datenblöcke (DB1, DB2) aufweisen, zwischen denen ein Block angeordnet ist, der für das Referenzsignal (RS) im ersten Modus und für die Redundanzdaten (RD) im zweiten Modus verwendet wird.

7. Verfahren nach einem der vorhergehenden Ansprüche, **dadurch gekennzeichnet, dass** das Datenformat für die zu übertragenden Datensignale in beiden Übertragungsmodi identisch gewählt wird.

## Claims

1. Data transmission method in which a data signal in the form of a data stream of data bursts (B) is transmitted with at least two transmission modes between a transmitter and a receiver, wherein, in the first mode, a reference signal (RS) is transmitted by the transmitter in the respective data burst (B) and evaluated in the receiver and in the second mode no reference signal (RS) is transmitted by the transmitter in the respective data burst (B), **characterized in that** in the second mode, instead of the reference signal (RS), additional redundancy data (RD) of the data signal are transmitted in the respective data burst (B) and the redundancy data (RD) transmitted instead of the reference signal (RS) are given by repeatedly transmitted data of the data signal.

2. Method according to Claim 1, **characterized in that** the repeatedly transmitted data are repeatedly received by the receiver and evaluated separately in the receiver.

3. Method according to Claim 2, **characterized in that** the data version of the repeatedly transmitted data having the greater received signal is selected for the further processing and/or transfer to the user.

4. Method according to one of Claims 1 to 3, **characterized in that**, in the second mode, interferences in the transmitter are eliminated.

5. Method according to one of Claims 1 to 4, **characterized in that** a number of data streams are transmitted simultaneously in accordance with the CDMA method.

6. Method according to one of the preceding claims, **characterized in that** the data bursts (B) have at least two data blocks (DB1, DB2) between which a block is arranged which is used for the reference signal (RS) in the first mode and for the redundancy data (RD) in the second mode.

7. Method according to one of the preceding claims, **characterized in that** the data format for the data signals to be transmitted is selected to be identical in both transmission modes.

## Revendications

1. Procédé de transmission de données selon lequel un signal de données sous la forme d'un flux de données de rafales de données (B) est transmis entre un émetteur et un récepteur avec au moins deux modes de transmission, un signal de référence (RS) étant, dans le premier mode, transmis par l'émetteur dans la rafale de données (B) correspondante puis analysé dans le récepteur et, dans le deuxième mode, aucun signal de référence (RS) n'étant transmis par l'émetteur dans la rafale de données (B) correspondante,
**caractérisé en ce que**
dans le deuxième mode, au lieu du signal de référence (RS), des données redondantes (RD) supplémentaires du signal de données sont transmises dans la rafale de données (B) correspondante et les données redondantes (RD) transmises à la place du signal de référence (RS) sont produites par les données du signal de données transmises de manière répétitive.

2. Procédé selon la revendication 1, **caractérisé en ce que** les données transmises de manière répétitive sont reçues de manière répétitive par le récepteur et sont analysées séparément dans le récepteur.

3. Procédé selon la revendication 2, **caractérisé en ce que** la version de données des données transmises de manière répétitive ayant le signal reçu le plus fort est sélectionnée pour la suite du traitement et/ou le transfert à l'utilisateur.

4. Procédé selon l'une des revendications 1 à 3, **caractérisé en ce que** dans le deuxième mode, les interférences dans l'émetteur sont éliminées.

5. Procédé selon l'une des revendications 1 à 4, **caractérisé en ce que** plusieurs flux de données sont transmis simultanément conformément au procédé CDMA.

6. Procédé selon l'une des revendications précédentes, **caractérisé en ce que** les rafales de données (B) présentent au moins deux blocs de données (DB1, DB2) entre lesquels est disposé un bloc qui est utilisé pour le signal de référence (RS) dans le premier mode et pour les données redondantes (RD) dans le deuxième mode.

7. Procédé selon l'une des revendications précédentes, **caractérisé en ce que** le format des données pour les signaux de données à transmettre est choisi de manière à être identique dans les deux modes de transmission.
